# EUROPEAN PATENT APPLICATION

(11) **EP 1 133 101 A1**
(43) Date of publication of application: **12.09.2001**
(21) Application number: 00301855.3
(22) Date of filing: 07.03.2000
(51) Int. Cl.: H04L 12/18

(54) **Data distribution**

(71) Applicant: BRITISH TELECOMMUNICATIONS public limited company, London EC1A 7AJ (GB)
(72) Inventor: The designation of the inventor has not yet been filed
(74) Representative: Dutton, Erica L. G.

(57) **Abstract**

A method and apparatus is provided for distributing data elements from a data source (N) to receivers (H1 to H9) over a communications network. A data element may be one at least two types, including a type conveying a full data set and a type conveying a data set comprising only corresponding meta-information. The meta-information data set includes at least a unique identifier for the full data set to which it corresponds. A hierarchy of forwarding computers (P, C1 to C3) is provided to forward a data element supplied by a data source (N) to sets of receivers (H1 to H9). Each forwarding computer (P, C1 to C3) is arranged with access to a respective forwarding table for recording the requirements of receivers to receive data elements of one of the available types, each forwarding computer (P, C1 to C3) forwarding a received data element according to the contents of the respective forwarding table. A receiver (H1 to H9) of a meta-information data element may initiate a search by the forwarding computers (P, C1 to C3) for a copy of a corresponding full data set stored at another receiver (H1 to H9).

## Description

The present invention relates to a method of operating a transmitter to distribute data elements to one or more receivers over a network.

In network terminology, sending a data element (i.e. a message, packet, frame or the like) across a network to a single recipient is known as unicasting. Sending a data element to all receivers connected to a network is known as broadcasting. Sending a data element to a set of recipients that form a subset of all receivers connected to a network is referred to as multicasting. Such a set of recipients is known as a multicast group.

In broadcast networks (e.g. nearly all Local Area Networks), all receivers receive any data element placed on the network. Each receiver has a network interface card that identifies packets that are intended for that receiver. In order to identify which multicast data elements are intended for that receiver, the network interface card must store an indication of each multicast address for which the receiver is a recipient.

In networks comprising switching nodes interconnected by point-to-point links, each switching node must store, for each multicast group, an indication of which of the links connected to it lead toward members of the multicast group.

Multicasting techniques are being used increasingly to distribute sets of information and other types of data over a communications network to groups of users. Such techniques can be particularly advantageous in the distribution of multi-category data where different users require receipt of different categories of data. Rather than unicasting data in different combinations of data categories to each user individually according to their particular requirements, in many cases sending the same data sets repeatedly over a network, multicast techniques enable each data set to be sent only once, with consequent savings in network use. For example, by transmitting data sets in each data category over a different multicast address, users may elect to listen on only a selected subset of the available addresses in order to receive only data sets in those respective categories of interest.

However, despite the advantageous savings in network use by multicast techniques, there remain data distribution applications in which data are transmitted unnecessarily. For example, a sports news service may categorise news articles according to the type of sport, a different multicast address being allocated to each sport so that all news articles for a particular sport are sent to the same respective multicast address. In some sports there may be a great many news articles available for transmission at certain times, for football for example. A client server electing, on behalf of its users, to receive news about football, would need to receive every available football news article transmitted over the football multicast address just in case its users wished to read a particular one of them.

According to a first aspect of the present invention, there is provided a method of operating a transmitter of data elements connected by means of a communications network to a plurality of receivers of said data elements, wherein each said data element is one of a plurality of available types of data element including a type conveying a full data set and a type conveying a data set comprising only corresponding meta-information, a meta-information data set including at least a unique identifier for a full data set to which it corresponds, and wherein each said data element includes an indication of its type, said method comprising:
(i) receiving, from at least one of said plurality of receivers, a request to receive one of said available types of data element;
(ii) storing, in a forwarding directory, an identifier for said at least one receiver and a corresponding record of the type of data element requested at step (i);
(iii) receiving a data element to be forwarded;
(iv) from the contents of the forwarding directory identifying a receiver, as recorded in the forwarding directory at step (ii), requesting receipt of the type of the data element received at step (iii);
(v) forwarding the received data element to a receiver identified at step (iv).

In this first aspect of the present invention, each full data set made available by a data source may be supplied with a corresponding meta-information data set. A transmitter is provided with access to a forwarding directory in which may be recorded each receiver's preference for receiving a full data set or only the corresponding meta-information data set. On receipt of a data set of an identified type, the transmitter is controlled to consult the forwarding directory to identify those receivers due to receive data sets of the identified type and to transmit the received data set accordingly.

"Meta-information" is defined within the present patent application as meaning "information about information" and may comprise at least a unique identifier for a full data set to which the meta-information corresponds. If the full data set is a text document for example, then besides uniquely identifying the document, a corresponding meta-information data set may include, for example, a short summary or abstract of the document or merely a title. In providing an option to receive only meta-information, a receiver has the option of requesting a full data set after reviewing a corresponding meta-information summary. In this way, embodiments according to this first aspect of the present invention enable substantial savings to be made in the use of a communications network in that unnecessary transmission of potentially large data sets may be avoided.

Preferably, the method according to this first aspect may be adapted for use where the communications network is multicast enabled and wherein step (ii) includes identifying a set of at least two receivers requesting data elements of the same type and wherein said identifier for said at least one receiver is a predetermined multicast address corresponding to said set of at least two receivers.

The Applicant's co-pending international patent application, number PCT/GB99/03114, describes an improved technique for multicasting multi-category information that is more economical in its use of multicast addresses. In that patent application, an apparatus and method are described for forwarding data elements over a multi-cast enabled network using subject-to-address directories at each forwarding computer. Rather than assign different multicast addresses to each information subject category, multi-cast addresses are pre-assigned to the different groups of potential receivers of information. In that way, a particular information subject category may be transmitted to a multi-cast address selected on the basis of the particular combination of receivers that have declared an interest in receiving information in that subject category, that interest being recorded in subject-to-address forwarding directories on appropriate forwarding computers.

Preferably, the option of forwarding only meta-information to particular receivers may be combined with the use of multi-category data sets, using multicasting techniques disclosed in the Applicant's above-referenced patent application. Thus a receiver may elect to receive only meta-information in respect of one data category and full data sets in respect of another for example.

In a preferred embodiment, the method according to the first aspect may include the steps of:
(vi) receiving, from a receiver of a meta-information data set, a search message containing a request to access a corresponding full data set and including a unique identifier for the requested full data set;
(vii) in dependence upon the accessibility of the requested full data set at a receiver connected to said transmitter, forwarding the search message to another transmitter over said communications network;
(viii) on receipt of a message from another transmitter including an address of a location for the requested full data set, or the earlier identification by said transmitter of the address of a connected receiver holding the requested full data set, forwarding an address for the requested full data set to the receiver sending the search message at step (vi).

It is to be expected that 'push' news services, Publish and Subscribe services and the like will soon migrate to the use of multicasting. 'Push' news services normally allow a user to select subjects of interest. One way of extending the bandwidth savings offered by the use of a multicast-capable network (whilst allowing a user to be selective as to which subjects he or she receives) is to transmit only meta-information to users over multicast addresses initially. Users may decide on the basis of received meta-information whether or not the corresponding full data set is likely to be of sufficient interest to justify a separate access request. Transmitters connected to the multicast-capable network may be arranged to locate and supply to a user, on request, the nearest copy of a particular full data set already made available via the network to another user for example.

Meta-information may either be made available by an information provider in respect of each full data set, or they may be generated separately, for example using a text summariser.

According to a second aspect of the present invention there is provided a data distribution system for distributing data elements supplied by a data source to one or more receivers, wherein the system comprises a hierarchy of forwarding computers having communication links there between, the hierarchy extending from a root forwarding computer to a plurality of end forwarding computers, said data source and each of said receivers being connected to a forwarding computer in the hierarchy, wherein a supplied data element may convey a full data set or a data set comprising only corresponding meta-information, a meta-information data set including at least a unique identifier for a full data set to which it corresponds, the supplied data element including an indication of the type of data set conveyed, and wherein each forwarding computer has access to a forwarding directory for recording the identity of at least one receiver of a data element conveying a particular type of data set and each forwarding computer is responsive to the contents of a respective forwarding directory to forward a supplied data element to a receiver selected in dependence upon the type of data set conveyed by the supplied data element.

Preferably, in this data distribution system, forwarding computers are arranged to store an address of a location for a full data set and a receiver of a meta-information data set may send to a connected forwarding computer a search message containing a request to access a full data set identified by the received meta-information, whereupon the search message passes through the hierarchy of forwarding computers until it reaches a forwarding computer holding an address relevant to the requested full data set and whereafter said address is communicated back through the hierarchy to the receiver sending the search message.

There now follows, by way of example only, a description of specific embodiments of the present invention. The description is to be read in conjunction with the accompanying drawings, of which:
Figure 1 is a schematic view of an intranet;
Figures 2a and 2b show multicast address allocations for subsections of the intranet;
Figure 3 shows the format of an application layer packet assembled in accordance with a preferred embodiment of the present invention;
Figures 4a, 4b, 4c and 5 illustrate subject-to-address mappings according to a preferred embodiment of the present invention;
Figure 6 is a flow diagram illustrating steps in operation of a forwarding computer for locating and retrieving a copy of a full data set according to a preferred embodiment of the present invention.

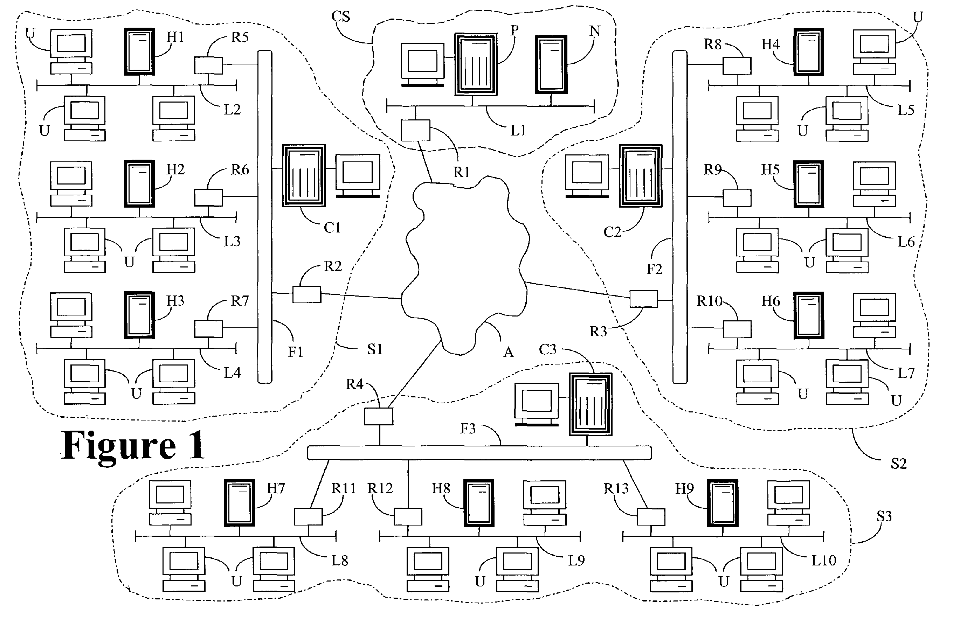

Embodiments of the present invention will be described below in the context of a simple multicast enabled corporate intranet as shown in Figure 1. However, in practice, embodiments of the present invention may be applied to more complex network arrangements and those using a data distribution mechanism other than multicast.

Referring to Figure 1, a simple corporate intranet comprises a central site area network (CS) which includes an IEEE 802.3 local area network L1 to which a sports news computer N, an organisation-level application packet forwarding computer P and a gateway router R1 are connected. The gateway router R1 is connected to an Asynchronous Transfer Mode (ATM) network A and may also be connected to an external network such as the Internet.

The ATM network A connects the gateway router R1 to three ingress routers (R2, R3, R4), one located at each of three sites (S1, S2 and S3 respectively). Each of the three site ingress routers (R2, R3, R4) is also connected to a respective one of three site-level internetworks. Each site level internetwork comprises a Fibre Distributed Data Interface (FDDI) backbone local area network (F1, F2, F3) which is connected by three building routers (R5 to R7; R8 to R10; R11 to R13) to three respective IEEE 802.3 building local area networks (L2 to L4, L5 to L7 and L8 to L10). Also connected to the FDDI network (F1 to F3) is an application layer packet forwarding computer (C1, C2, C3).

To each building area network (L2 to L4, L5 to L7 and L8 to L10) is connected a server (H1 to H9) and a number of personal computers (PCs) or other items of user terminal equipment (U).

The sports news computer N at the organisation's central site includes a database containing a number of news articles about various sports. These news articles are updated every few hours.

The server (H1 to H9) connected to each of the building area networks (L2 to L10) is designated as a news application server, providing local access to sports news articles from user terminal equipment connected to the same building area network.

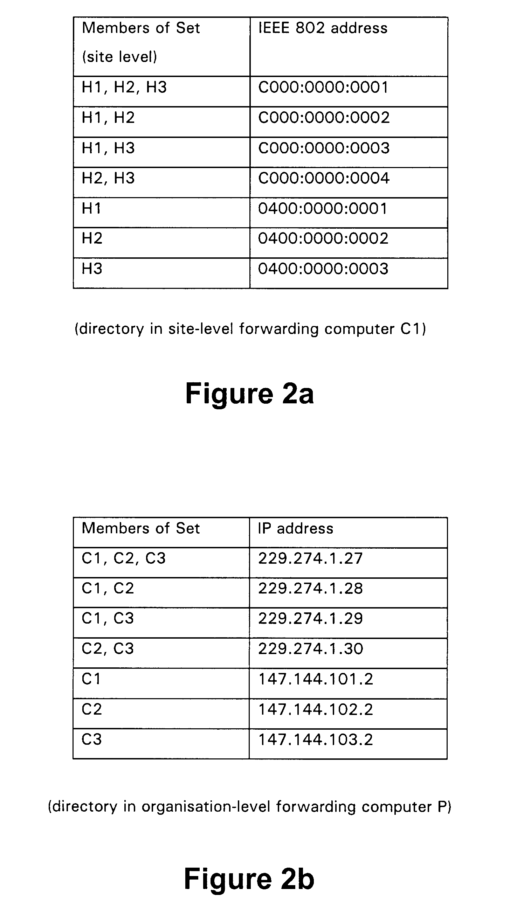

In configuring the intranet, each of the application layer packet forwarding computers (C1, C2, C3) is manually configured with a site area multicast directory (e.g. Figure 2a in respect of C1). The directory lists possible sets of recipients (left-hand column) and corresponding IEEE 802 addresses (right-hand column). IEEE 802 addresses can be forwarded over both the FDDI network (F1 to F3) and the building area IEEE 802.3 local area networks (L2 to L10). Those skilled in the art will realise that the building routers (R5 to R7; R8 to R10; R11 to R13) are therefore acting as bridges in the present embodiment.

Further configuration involves the network interface cards of the news application servers H1 to H9 being configured to ensure that frames having addresses which relate to sets of recipients that include that server are passed from the network interface card to the server itself. For example (see Figure 2a), the network interface card of news application server H1 which is present in the sets (H1,H2,H3), (H1,H2), (H1,H3) and (H1) is configured to accept and process frames addressed to IEEE 802 addresses C000:0000:0001, C000:0000:0002, C000:0000:0003 (those skilled in the art will recognise these as multicast addresses) and also unicast address 0400:0000:0001.

Similar procedures are carried out in relation to the other site area internetworks (S2, S3).

The next stage in the configuration procedure is to create a set-to-IP address conversion table to be stored on the organisation level packet forwarding computer P. This table is similar to that (e.g. Figure 2a) created on each of the site-level forwarding computers (C1, C2, C3), but the sets of recipients in the table created on forwarding computer P are sets of site-level forwarding computers (C1, C2, C3) rather than sets of news application servers (H1 to H9). Also, IP addresses are used in the table created on forwarding computer P because the ATM network A is unable to forward IEEE 802.3 frames. One possible example of the contents of the set-to-IP address conversion table stored in the organisation-level forwarding computer P is shown in Figure 2b.

Further, each site area ingress router (R2, R3, R4) is configured to forward packets having an appropriate one of the addresses in Figure 2b to the site-level forwarding computer (C1, C2, C3). For example, site area ingress router R3 is configured to send packets having one of the first, second, fourth or sixth addresses shown in Figure 2b to the site-level forwarding computer C2.

Those skilled in the art will realise that this will result in gateway router R1 having four multicast addresses in its multicast routing table. Each entry will include a mapping from the IP address to a corresponding VPI/VCI (Virtual Path ldentifier/ Virtual Circuit Identifier) pair.

The forwarding computers P, C1, C2 and C3 in the intranet shown in Figure 1 are arranged in a predetermined hierarchical structure, determined at the time of configuring the network, although the embodiment shown in Figure 1 is a very simple hierarchy. In this simple hierarchical structure, the organisation level forwarding computer P is chosen as the "parent" forwarding computer to three "child" forwarding computers C1, C2 and C3. Together, the forwarding computers control the distribution of messages to be multicast or unicast from an organisation level information source such as sports news computer N to one or more site level destinations. Each of the site level forwarding computers C1 to C3 act, effectively, as "parent" to respective news application servers H1 to H9 operating as clients. At each level of the hierarchy below the top level (P in this case), each forwarding computer and client server is arranged to store the address of its respective parent forwarding computer, according to the predetermined hierarchical structure, so that if a message is required to be sent up the hierarchy it may be sent directly to the appropriate parent.

A corporate intranet may in practice have several layers of forwarding computers within the hierarchy and each "parent" may have many more than three "child" forwarding computers or client servers associated with it.

Once this basic configuration has taken place, users of the news application servers (H1 to H9) may subscribe to receive news articles about their chosen sport and to indicate, for that sport, whether they want to receive the full news articles or only meta-information (e.g. a summary and a unique identifier for the full article) about each of the respective news articles. Each news application server (H1 to H9) is controlled by a news application program (installed on the server from a compact disc). The news application program provides an interface to enable users of terminal equipment U to access news articles and news article meta-information stored on the news application server (H1 to H9). In particular, the news application program presents information to users about the sports news categories available from the sports news computer N and enables users to select sports for which they would like to subscribe to receive corresponding news articles.

Preferably a news reader program may be installed on that user terminal equipment U comprising a PC to provide a user interface and to communicate with the respective news application server (H1 to H9). The news reader program may provide a graphical user interface for display of news articles available from the news application server and to enable users to select sports and particular news articles that they would like to receive via their respective news application server.

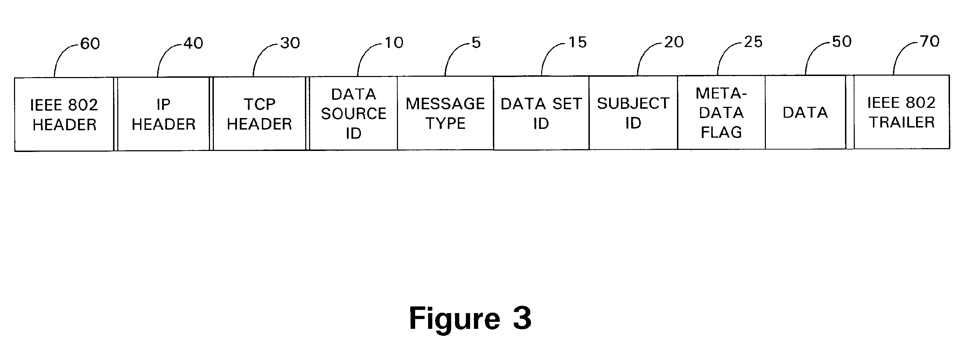

The news application program installed on each news application server (H1 to H9) is arranged to record user requirements for the receipt of news articles relating to the available sports categories. In order to satisfy those requirements, the news application program controls the server to send appropriate "subscribe" request packets, preferably using the packet structure shown in Figure 3, for news articles concerning particular sports, as selected by users, to the predetermined "parent" site-level forwarding computer (C1, C2, C3). The news application program will take account of user requirements to receive only meta-information regarding particular sports when composing subscription request packets. In particular, if all users of a particular news application server require only meta-information relating to a particular sport, then the news application server will subscribe to receive only meta-information from its parent forwarding computer. However, if just one of those users requires full news articles for that sport, then the news application server will need to subscribe to receive full news articles.

Preferably, a subscription to receive full news article data sets is interpreted by forwarding computers to include a subscription to receive the corresponding meta-information data sets too.

With reference to Figure 3, in composing a subscription request packet according to the structure shown in Figure 3, the news application program controls the news application server (H1 to H9) to insert data indicating 5 that a file is sought, that the file relates to a particular news data source 10, an identification of the subject 20 about which the news articles are sought and an indication 25 of whether only meta-information is required for news articles about that subject 20. The news application server then operates in a conventional manner to successively add to the data: a TCP header 30, an IP header 40 and an IEEE 802 header 60 and trailer 70. The other fields in the packet structure shown in Figure 3 are set to null for subscription request packets.

Each site-level application packet forwarding computer (C1, C2, C3) is arranged to store, or to have access to, a respective packet forwarding table. The forwarding table records the address of an intended set of one or more recipients (selected from those addresses recorded in directories such as that shown in Figure 2a) for packets conveying news article data sets. When a packet forwarding computer receives a packet conveying a news article data set, the contents of the forwarding table determine those recipients to whom the packet will be forwarded.

On receiving the subscription request from a news application server (H1 to H9), the site-level application packet forwarding computer (C1, C2, C3) is controlled by a forwarding table updating program (installed on that computer from compact disc D2) to establish which of the on-site news application servers (H1 to H9) are now interested in receiving news articles about the chosen sport. If the request is not already being met then the forwarding table is updated accordingly. The forwarding table updating program is also responsive to a change in the meta-information flag 25 for the sender of the request packet in respect of a particular combination of data source 10 and subject 20, to update the forwarding table accordingly. Those skilled in the art will be able to generate a suitable table updating program.

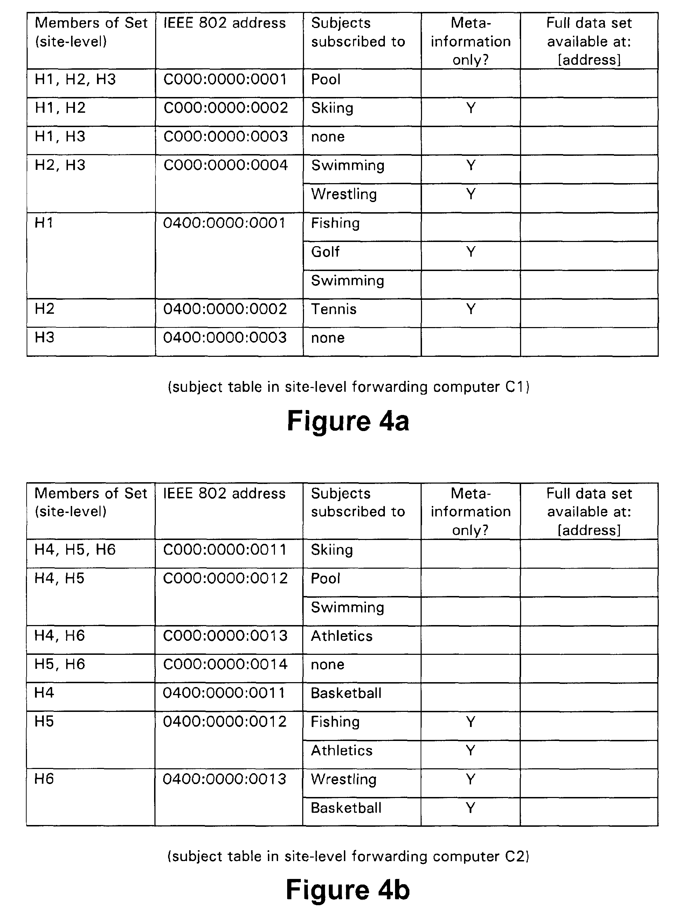

Were news application server H1 to send, for example, a 'subscribe' request for meta-information relating to news articles concerning the subject 'Golf', then the site-level forwarding computer operating under control of the table updating program would insert or update a record as appropriate in the forwarding table as shown in Figure 4a. In this example, neither of the other news application servers H2 and H3 associated with forwarding computer C1 had subscribed to receive golf news articles and so a record is inserted in the forwarding table to indicate that golf article meta-information is to be forwarded to the unicast address for H1. Had, for example, news application server H3 already subscribed to receive golf article meta-information, then the forwarding table for C1 would have been updated to indicate that golf article meta-information is to be forwarded to the multicast address for H1 and H3.

Having received and processed a subscription request, recording details in the forwarding table, the packet forwarding program controls the site-level application packet forwarding computer (C1, C2, C3) to determine whether that forwarding computer has itself already subscribed to the requested subject and whether it has subscribed to receive meta-information or full data sets for the particular subject of the received subscription request. If it does not subscribe to that subject or if it has not arranged to receive full data sets where full data sets were specified in the received subscription request, then the site-level forwarding computer is further controlled to send an appropriate subscribe request to its predetermined parent forwarding computer, the organisation-level forwarding computer P in this case.

On receipt of that subscribe request, the organisation-level forwarding computer P is controlled by a program similar to that described above in relation to the site-level forwarding computer (installed on the computer P from a compact disc) to establish which set of the site-level forwarding computers (C1, C2, C3) now requires news articles concerning the selected subject to be sent in the form of meta-information or full data sets. The organisation-level forwarding computer is then further controlled to update its forwarding table accordingly. Again, programs to implement this operation can be easily generated by those skilled in the art.

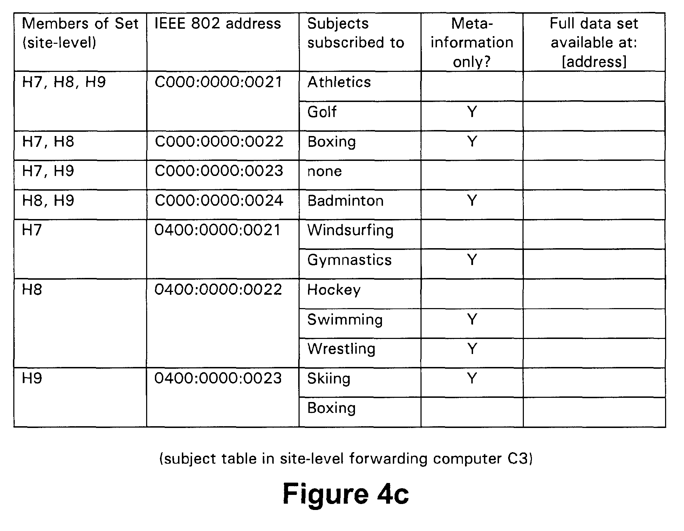

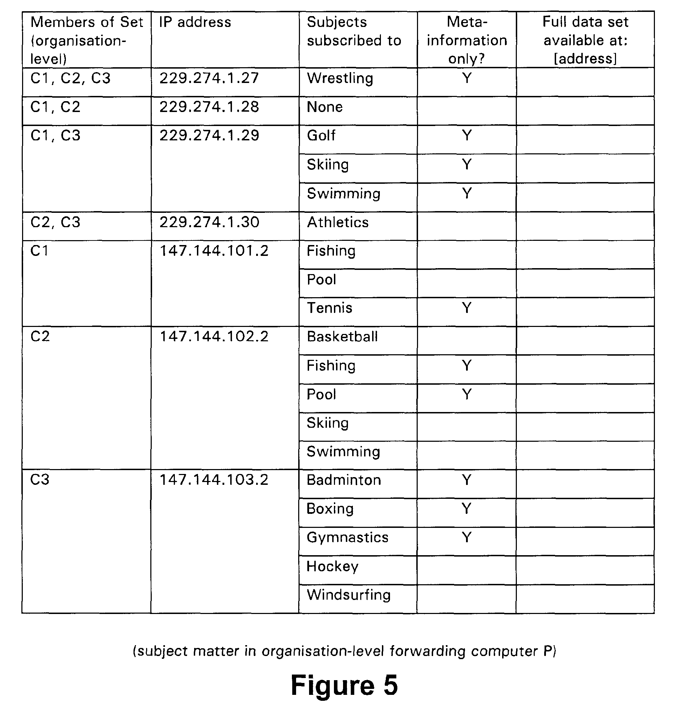

After a number of requests have been received from the various news application servers (H1 to H9) in the intranet, the forwarding tables will associate several subjects and their respective meta-information flag settings with each multicast or unicast address. For example, the resultant forwarding tables of site-level forwarding computers C1, C2 and C3 might be as shown in Figures 4a, 4b and 4c respectively. At the same time, the forwarding table associated with organisation-level forwarding computer P might be as shown in Figure 5.

Referring to Figure 4a it will be seen, for example, that as two news application servers (H1, H2) have requested articles (in this example meta-information only) relating to a particular subject (in this example Skiing), the IEEE 802 address associated with the subject is a multicast address (in the notation generally used, IEEE 802 multicast addresses begin with the hexadecimal number COOO and IEEE 802 unicast addresses begin with hexadecimal number 0400). The particular multicast address used to transmit skiing meta-information is that allocated earlier (see Figure 2a) to the particular combination (H1, H2) of news application servers. With all possible addresses pre-allocated and configured on routers and forwarding computers, it is a straightforward matter for forwarding table updating programs installed on forwarding computers to make appropriate table updates in response to "subscribe" request messages received from news application servers or other forwarding computers.

It will be realised by those skilled in the art that 'unsubscribe' requests could also easily be implemented.

With forwarding tables recording, for each forwarding computer (P, C1, C2, C3), the requirements of recipients at the layer below for receipt of particular categories of news article, forwarding computers are ready to begin receiving packets conveying news article data sets and routing them accordingly. On receiving a news article data set, be it a full data set or meta-information only, each of the site-level forwarding computers (C1, C2, C3) is controlled by the forwarding program to extract both the news article data set (Figure 3, 50)-meta-information or the full data set, according to the setting of the meta-information flag 25 - and subject 20 from the payload of the incoming TCP segment and send another TCP segment containing the news article data set to the IEEE 802 address associated with the particular combination of subject 20 and meta-information flag 25 in the table. However, preferably, if full data sets are to be forwarded then corresponding meta-information will also be forwarded to subscribing receivers by default. Programs executable to control the forwarding computers to behave in this manner can be generated by those skilled in the art.

To give an example, were the organisation-level computer P to receive a new news article from sports news computer N concerning 'swimming', comprising a full news article and a corresponding meta-information data set, and were the forwarding tables to be as shown in Figures 4a, 4b, 4c and 5, then the organisation-level forwarding computer P would be controlled to send one or more IP packets containing the meta-information data set to address 229.274.1.29 (the multicast address corresponding to the combination of site-level forwarding computers C1 and C3) and to send one or more IP packets containing the full news article to address 147.144.102.2 (the unicast address of forwarding computer C2). On receipt, for example, of the IP packets addressed to the multicast address, the router R1 would fragment the IP packet(s) and, in accordance with the routing table entries made at the configuration stage, send the fragments as a stream of ATM cells having a corresponding VPI/VCI pair as mentioned above. Once the corresponding packets arrive at the first site-level forwarding computer C1, that forwarding computer C1 is controlled to reassemble the IP packet(s), extract the meta-information data set for the subject (swimming) from its payload and to transmit the IP packet(s) in an appropriately addressed IEEE 802 frame over the site level internetwork F1. The fourth record of Figure 4a shows the associated IEEE 802 address. As a result of the earlier configuration stage, the network interface cards of the news application servers H2 and H3 accept and process the transmitted packet when it appears on the corresponding building area networks L3 and L4 respectively, the news application servers H2 and H3 then processing the received packet for presentation of the conveyed data set to a user. A corresponding process is carried out at forwarding computer C3 in respect of the meta-information packet(s) and at forwarding computer C2 in respect of the unicast packets containing the full news article.

A user of a news application server (H1 to H9) subscribing to receive only meta-information relating to news articles for a particular sport may choose, having examined a particular meta-information data set - for example a summary of an identified news article relating to that sport - to request access to the corresponding full news article data set. If the requested full data set is not already stored on the news application server, the news application program installed on the news application server will need to initiate a process to locate a copy elsewhere on the Intranet. To this end, the news application program may control the news application server to generate a corresponding access request message for sending to the respective 'parent' forwarding computer (C1, C2 or C3) specifying the particular full news article data set required using a unique identifier for the full data set provided by the meta-information. The identity of the respective parent forwarding computer will have been established at the network configuration stage and the parent's address stored within the news application server. The access request message generated by the news application server (H1 to H9) may conveniently conform to the message format shown in Figure 3, with a distinct message type identifier 5 being allocated for such access request messages, the news application server specifying a unique data set identifier for the particular full data set sought together with the corresponding news source (data source ID 10) and sport (subject ID 20). The news application server operates in a conventional manner to add to the access request message: a TCP header 30, an IP header 40 and an IEEE 802 header 60 and trailer 70.

Preferably, when requesting access to a full data set in a specified sports category 20 from data source 10, if the unique data set identifier field 15 is left blank, then the request for access will be interpreted by a receiving forwarding computer (C1 to C3, P) to be a request to access all available full data sets in the specified category 20 from source 10, for example those created within a default time period prior to the request.

To enable a copy of the requested full data set to be located quickly and efficiently by forwarding computers (C1, C2, C3 and P) in the hierarchy, a further address field is included in the structure of forwarding table records. Referring to Figures 4 and 5, the further address field is shown as the right hand column in each table and is provided to store, for a particular sports category, the address of a news application server known to hold copies of full data sets in that sports category.

A description of a process for updating the full data set address field for a particular sports category and for locating a copy of a requested full data set is set out below, according to a preferred embodiment of the present invention. Preferably, according to that process, it is intended that each full data set address field in a particular forwarding table is populated with an address of the "closest" known location to the respective forwarding computer from where the respective full data set may be obtained, as soon as that location becomes known. Typically, the closest location is determined following a previously successful search for a particular full data set initiated by a news application server (H1 to H9) on behalf of one of its users. Of course, if no copy of a full data set in a particular sports category has been distributed to any news application server (H1 to H9), for example if no news application server has subscribed to receive full data sets at that time, then the first request for access to the full data set by a user can only be serviced by the sports news computer N itself via forwarding computer P. However, having provided a copy of the full data set to a particular requesting news application server, that server becomes an alternative source of the full data set for subsequent access requests by users 'close' to that server, linked for example via the same parent forwarding computer (C1 to C3).

Preferably, forwarding table updating programs installed on forwarding computers (C1 to C3, P) may be arranged to delete addresses recorded for the location of full data sets for particular sports categories after a predetermined time period. In this way, new searches may be triggered for particular full data sets so that addresses may be renewed. This has the advantage that not only do full data set addresses not become and remain invalid, but use may be made of a potentially closer source of a full data set shortly after it becomes available.

In enabling the closest copy of a full data set to be accessed, preferred embodiments of the present invention provide the advantage that network traffic may be confined to the smallest possible portion of the Intranet when servicing user requests for access to full news article data sets. Without this feature, all requests for access to full data sets would ultimately need to be serviced directly from sports news computer N.

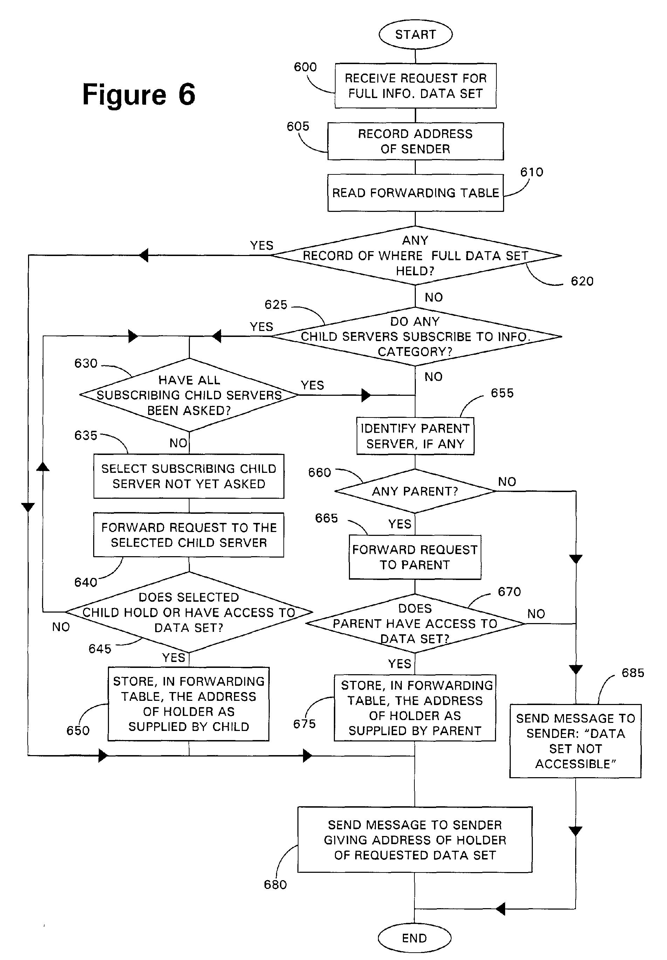

Steps in operation of a forwarding computer (P, C1, C2, C3), enabling a copy of a full data set in a selected information category to be located and retrieved, and its location recorded for subsequent use, will now be described with reference to Figure 6. The message structure shown in Figure 3 may be used to convey requests by news application servers (H1 to H9) for access to a full data set and to convey corresponding responses. Distinct message type identifiers (5) may be allocated for the full data set access request message and corresponding response message identified in the process now described.

Referring to Figure 6, operation begins at STEP 600 upon receipt by the present forwarding computer (P, C1, C2, C3) of a message containing a request for access to a full data set for a news article in a particular sports category. The particular full data set requested is identified by a unique data set identifier 15 in the access request message, as provided in the corresponding meta-information data set. The access request message also includes an identifier for the latest sender of the request - a particular news application server (H1 to H9) or a forwarding computer (C1 to C3). While the access request message itself may have originated at a particular news application server (H1 to H9), it may have been forwarded to the present forwarding computer by another forwarding computer. At STEP 605, the present forwarding computer records the address of the latest sender of the access request message. At STEP 610, the present forwarding computer examines its forwarding table for records relating to the particular sports category of the access request. At STEP 620, if in the forwarding table an address is recorded giving a location for the requested full data set, then at STEP 680 the present forwarding computer transmits a message to the latest sender of the request to provide the recorded address of where the requested data set may be obtained, typically another news application server (H1 to H9).

If, at STEP 620, there is no record in the present forwarding table of where to find full data sets for the requested sports category, then at STEP 625 the present forwarding computer determines from its forwarding table whether any "child" servers (other than the sender of the access request), including any forwarding computers below the present forwarding computer in the predetermined multicast network hierarchy, have subscribed to receive full data sets in the particular sports category. The intention is to forward the access request message to each such child server in turn, keeping a record of those child servers that have received the request, until either a copy of the requested data set is located or all child servers have responded negatively to the request. Therefore, if at least one subscribing child server is identified at STEP 625, then at STEP 630 the present forwarding computer checks its records to determine whether any identified child servers are yet to receive the access request message. If, at STEP 630, one or more child servers have yet to receive the request, then at STEP 635 one is selected and, at STEP 640, the access request message is forwarded to the selected child server, the present forwarding computer being identified in the message header as the sender of the message. While every forwarding computer (P, C1, C2, C3) is arranged to implement the process being described with reference to Figure 6, preferably each child news application or other client server may be arranged at least to recognise and respond to an access request message, sent by its parent forwarding computer, with an indication of whether or not it holds a copy of the requested full data set.

If, at STEP 645, the child server responds by sending a message to the present forwarding computer to say that it does indeed have or have access to a copy of the requested data set, the message including a respective network address, then at STEP 650 the present forwarding computer stores the supplied address in its forwarding table. In general, the forwarding table will include a record specifically relating to the forwarding of meta-information for the particular sports category of the requested full data set. Therefore, at STEP 650, the supplied address is stored in the full data set address field of that record. Processing then proceeds to STEP 680 where the present forwarding computer transmits a message to the latest sender of the request to provide the address recorded at STEP 650 for where the requested data set may be obtained.

If, at STEP 645, the child server does not hold or have access to a copy of the requested data set, processing returns to STEP 630 to determine whether any more child servers of the present forwarding computer, other than the sender if the access request message, have yet to receive the access request message.

If, at STEP 630, all subscribing child servers (other than the sender if the access request message) have received the access request message and responded negatively, none having access to a copy of the requested data set, then at STEP 655 the present forwarding computer identifies its parent server, if there is one, as predefined according to the multicast network hierarchy. At STEP 655 in the process, it should already be apparent that the requested data set is not accessible from any of the forwarding computers in the multicast network hierarchy at or below the present forwarding computer. If the present forwarding computer is at the top of the network hierarchy (P in this example) then no parent will be identifiable at STEP 655 and, because no further address was recorded at STEP 620, it must be assumed that the requested data set is no longer accessible. Therefore, at STEP 660, if there is no parent, then at STEP 685, the present forwarding computer sends a message to the sender of the access request message to say that the requested data set is not accessible.

However, if at STEP 660 a parent to the present forwarding computer is identified, then at STEP 665 the access request message is forwarded to the identified parent, the present forwarding computer being identified in the header of the access request message as the latest sender. Subsequently, if at STEP 670 a reply is received from the parent to confirm that a copy of the requested data set is held or is accessible (e.g. from one of its other child servers or by means of its parent), supplying the network address of the forwarding computer with access to the data set, then at STEP 675 the present forwarding computer stores the address supplied by its parent in the forwarding table. Processing then proceeds to STEP 680 where the present forwarding computer transmits a message to the latest sender of the request to provide the address recorded at STEP 675 for where the requested data set may be obtained.

However, if at STEP 670 the parent does not have access to a copy of the requested data set, then the requested data set is not accessible from anywhere within the multicast network hierarchy - a negative response from the parent is the result of all upward enquiries by the parent - and at STEP 685 the present forwarding computer sends the "Data set not accessible" message to the latest sender of the access request message.

With every forwarding computer in a multicast hierarchy (as defined at the network configuration stage) being arranged to operate the process described above with reference to Figure 6, it can be seen that a request for access to a data set will be propagated from one forwarding computer to another, according to the network hierarchy, making use on the way of respective forwarding tables to identify 'child' servers that may have subscribed to receive full data sets for the particular sports category, until a copy of the requested data set is located. From the point at which the requested data set is located, a message conveying the network address of the parent forwarding computer for the server holding the requested data set will be communicated back through the chain of forwarding computers to the parent of the originator of the access request and from there to the originating news application server (H1 to H9). On receipt, the originating news application server may send a direct data transfer request to the identified address to obtain a copy of the requested full data set, specifying the respective unique data set identifier. Of course, if the requested data set was not found in the search, the "Data set not accessible" message will be propagated back to the originating news application server.

It will be clear to a skilled person that the process described above with reference to Figure 6 may be modified in a number of ways in order to locate a specified data set. It will also be clear that the process may be adapted to operate with other types of network arrangement, not necessarily involving multicast techniques for the distribution of data sets from a data source.

In a further embodiment of the present invention, operation of forwarding computers may be adapted to take account of the situation where, after supplying an address apparently giving the location of a requested full data set, the requested data set is found not to be available from that address when access is attempted by a news application server. In that embodiment, in the event of an error message being returned to the requesting news application server, a new access request message may be transmitted through the respective parent forwarding computer, including the erroneous address. Forwarding computers may be adapted to be responsive to the inclusion of such an address in an access request message to compare a recorded address with the included erroneous address and to delete the recorded address from the appropriate forwarding table record if it matches the erroneous address.

In a further embodiment, the process described with reference to Figure 6 may be adapted to include a "maximum effort" threshold that may be defined by either the news application server originating the request for a full data set, or by the parent forwarding computer for that originating server. A maximum effort threshold defines for example a maximum period of time, or a maximum number of times that a request message may be forwarded by forwarding computers without successfully locating the requested full data set. Upon reaching the threshold, a message is returned to the originating news application and the search for a "closest" full data set is abandoned, alternatively initiating a direct request to the sports news computer N, via forwarding computer P, to obtain the full data set. Such a threshold may be applied for example when a particular data set is required urgently by a user. If the threshold is defined in terms of a counter of the maximum number of stages over which the request message may be forwarded, the counter being included in the access request message, then each forwarding computer may decrement the counter on receipt of the message, only forwarding the message if the counter is greater than zero, otherwise sending a message to the originator's parent forwarding computer to indicate that the counter has reached zero.

In a further embodiment, a forwarding computer may be adapted, in the event that a second access request is received from a different server in respect of the same full data set before the result of a first received request is available, to await the result of the first request and to employ that result in response to the second request rather than process and if necessary forward the second request.

While embodiments of the present invention have been described with respect to a sports news service, the present invention may be applied to other types and methods of data distribution from one or more data sources, using multicast, point-to-point or other data transfer techniques. Data sets need not necessarily be associated with particular data categories. Data sources may provided more than two different types of representation for a data set besides meta-information and a corresponding full data set. An appropriate indicator may be used to distinguish different representations required by receivers in forwarding tables.

## Claims

1. A method of operating a transmitter of data elements connected by means of a communications network to a plurality of receivers of said data elements, wherein each said data element is one of a plurality of available types of data element including a type conveying a full data set and a type conveying a data set comprising only corresponding meta-information, a meta-information data set including at least a unique identifier for a full data set to which it corresponds, and wherein each said data element includes an indication of its type, said method comprising:
(i) receiving, from at least one of said plurality of receivers, a request to receive one of said available types of data element;
(ii) storing, in a forwarding directory, an identifier for said at least one receiver and a corresponding record of the type of data element requested at step (i);
(iii) receiving a data element to be forwarded;
(iv) from the contents of the forwarding directory identifying a receiver, as recorded in the forwarding directory at step (ii), requesting receipt of the type of the data element received at step (iii);
(v) forwarding the received data element to a receiver identified at step (iv).

2. A method according to Claim 1 for use where said communications network is multicast enabled and wherein step (ii) includes identifying a set of at least two receivers requesting data elements of the same type and wherein said identifier for said at least one receiver is a predetermined multicast address corresponding to said set of at least two receivers.

3. A method according to Claim 1 or Claim 2, including the steps of:
(vi) receiving, from a receiver of a meta-information data set, a search message containing a request to access a corresponding full data set and including a unique identifier for the requested full data set;
(vii) in dependence upon the accessibility of the requested full data set at a receiver connected to said transmitter, forwarding the search message to another transmitter over said communications network;
(viii) on receipt of a message from another transmitter including an address of a location for the requested full data set, or the earlier identification by said transmitter of the address of a connected receiver holding the requested full data set, forwarding an address for the requested full data set to the receiver sending the search message at step (vi).

4. A data distribution system for distributing data elements supplied by a data source to one or more receivers, wherein the system comprises a hierarchy of forwarding computers having communication links there between, the hierarchy extending from a root forwarding computer to a plurality of end forwarding computers, said data source and each of said receivers being connected to a forwarding computer in the hierarchy, wherein a supplied data element may convey a full data set or a data set comprising only corresponding meta-information, a meta-information data set including at least a unique identifier for a full data set to which it corresponds, the supplied data element including an indication of the type of data set conveyed, and wherein each forwarding computer has access to a forwarding directory for recording the identity of at least one receiver of a data element conveying a particular type of data set and each forwarding computer is responsive to the contents of a respective forwarding directory to forward a supplied data element to a receiver selected in dependence upon the type of data set conveyed by the supplied data element.

5. A data distribution system according to Claim 4, wherein forwarding computers are arranged to store an address of a location for a full data set and wherein a receiver of a meta-information data set may send to a connected forwarding computer a search message containing a request to access a full data set identified by the received meta-information, whereupon the search message passes through the hierarchy of forwarding computers until it reaches a forwarding computer holding an address relevant to the requested full data set and whereafter said address is communicated back through the hierarchy to the receiver sending the search message.

6. A program storage device readable by a processing apparatus, said device embodying a program of instructions executable by the processing apparatus to perform method steps for transmitting a data element over a network to a set of recipients selected from a plurality of network receivers, said method steps comprising steps according to any one of claims 1 to 3.

7. A computer program comprising computer program code adapted to perform the method steps of any one of claims 1 to 3 when said program is executed by a computer.
